# EUROPÄISCHE PATENTSCHRIFT

(11) **EP 2 600 706 B1**
(45) Veröffentlichungstag und Bekanntmachung des Hinweises auf die Patenterteilung: **04.04.2018**
(21) Anmeldenummer: 11729580.8
(22) Anmeldetag: 01.07.2011
(51) Int. Cl.: A01B 69/02, A01B 61/04

(54) **SPURREISSER FÜR LANDWIRTSCHAFTLICHE MASCHINEN**
RIDGE-MARKING DEVICE FOR AGRICULTURAL MACHINES
TRACEUR POUR MACHINES AGRICOLES

(30) Priorität: 06.08.2010 DE 102010036878
(43) Veröffentlichungstag der Anmeldung: 12.06.2013
(73) Patentinhaber: Amazonen-Werke H. Dreyer GmbH & Co. KG, 49205 Hasbergen (DE)
(72) Erfinder: REINKE, Wilfried, 26123 Oldenburg (DE)
(86) Internationale Anmeldenummer: PCT/EP2011/003277
(87) Internationale Veröffentlichungsnummer: WO 2012/016615

(56) Entgegenhaltungen:
- EP-A1- 0 730 817
- EP-A1- 0 772 961
- GB-A- 564 015

## Beschreibung

Die Erfindung betrifft einen Spurreißer für landwirtschaftliche Maschinen gemäß des Oberbegriffes des Patentanspruches 1.

Durch die EP 0 730 817 B1 ist ein derartiger Spurreißer bekannt. Dieser Spurreißer ist für eine Sämaschine vorgesehen. Der Spurreißer weist einen aus einem Quadratrohr bestehenden und mittels eines Gelenkes am Rahmen der Sämaschine angeordneten Arm auf. An dem dem Gelenk abgewandten Ende des Armes ist eine gebogene Blattfeder angeordnet, welche an ihrem dem Arm abgewandten Ende ein Drehlager trägt, an dem ein als Spurreißerscheibe ausgebildetes Spurreißerelement angeordnet ist. Die Blattfeder ist als ein separates Teil ausgebildet und mittels Schraubelementen an dem Arm und an dem das Drehlager tragenden Halteelement befestigt. Die Ausgestaltung des als Blattfeder ausgebildeten Sicherheitselementes und dessen Anordnung ist sehr montageaufwändig. EP-A-0 772 961 und GB-A-564 015 offenbaren weiteren Spurreißer.

Der Erfindung liegt die Aufgabe zu Grunde, einen Spurreißer mit einem vereinfachten elastischen Sicherheitselement zu schaffen.

Diese Aufgabe wird erfindungsgemäß durch einen Spurreißer gemäß Anspruch 1 gelöst. Infolge dieser Maßnahmen ist das Sicherheitselement in integrierter Weise Teil des Armes, welches den Auslegerarm der Spurreißers bildet. Das federnde Sicherheitselement wird einfach durch das Abbiegen eines Teiles des Armes zu einem Hebelarm, der auf den lang gestreckten liegenden Teil des Armes mit einem Drehmoment einwirken kann, so dass dieser Teil des Armes dann als Torsionsfeder wirkt.

Eine einfache Ausgestaltung des Armes mit dem integrierten Sicherheitselement dadurch erreicht, dass das obere Ende des Mittelsteges an dem in Betriebsstellung des Spurreißers in liegender Weise in Richtung des Gelenkes verlaufenden Teil des Armes anschließt, dass das untere Ende des Mittelsteges an dem das Spurreißerelement tragenden Teil des Armes anschließt.

Eine einfache Anordnung der Spurreißerscheibe lässt sich dadurch erreichen, dass das das Spurreißerelement tragende Teil des Armes zumindest ein Lagerelemente aufweist, dass an dem Lagerelement das als drehbar angeordnete Spurreißerscheibe ausgebildete Spurreißerelement angeordnet ist.

Eine einfache Ausgestaltung des Sichertelementes ergibt sich dadurch, dass der zwischen dem Gelenk und dem S-förmigen Bereich sich befindlichen Teil des Armes als Torsionsfederelement ausgebildet ist.

Eine einfache Herstellung des Hebelarmes für die Torsionsfeder lässt sich dadurch verwirklichen, dass der aufrechte Mittelsteg durch abbiegen des Armes nach unten gebildet ist.

Weitere Einzelheiten der Erfindung sind der Beispielsbeschreibung und den Zeichnungen zu entnehmen. Hierbei zeigen
- Fig. 1: den Spurreißer in Betriebsstellung und in perspektivischer Darstellung,
- Fig. 2: den Spurreißer in Betriebsstellung und in der Ansicht von hinten und
- Fig. 3: den Arm der Spurreißers in der Darstellungsweise gemäß Fig. 2.

Der Spurreißer 1 ist mittels eines Gelenkes 2 an der über eine anschraubbaren Halterung 3 an dem nicht dargestellten Rahmen der nicht dargestellten landwirtschaftlichen Maschinen, beispielsweise einer Sämaschine oder eines Bodenbearbeitungsgerätes angeordnet. Der Spurreißer 1 weist den Arm 4 auf, der an seinen einem Ende 5 mit dem Gelenk 2 verbunden ist. Das andere Ende 6 des Armes 4 ist mit der Drehlagerung 7 des als Spurreißerscheibe 8 ausgebildeten Spurreißerelementes verbunden.

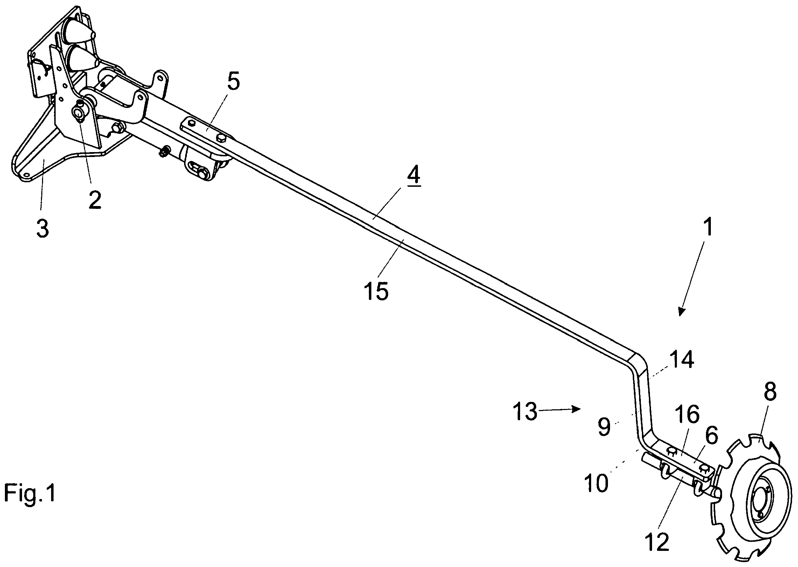

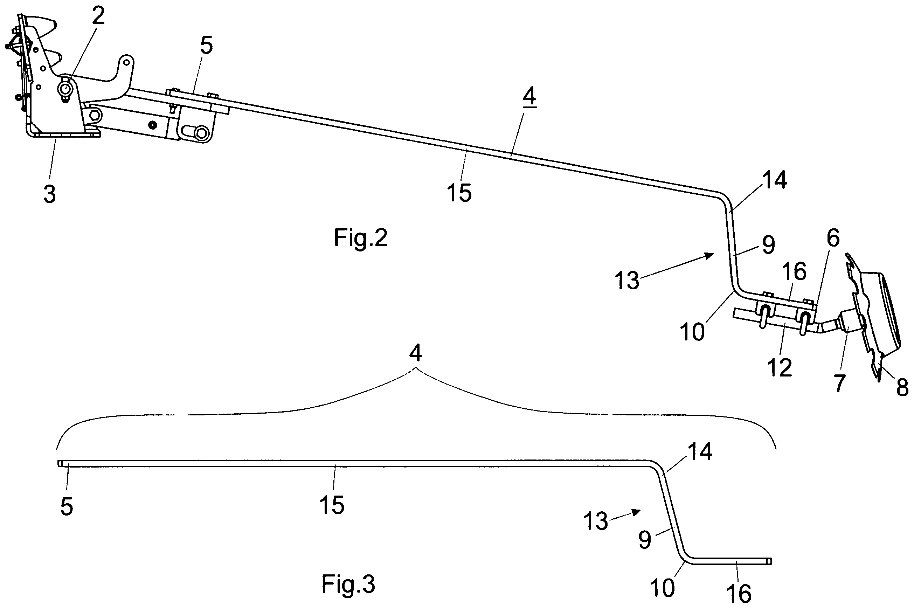

Der Arm 4 ist in der Nähe der Drehlagerung 7 bzw. des Spurreißerelementes 8 S-förmig ausgestaltet. Hierzu ist der Arm 4, bezogen auf die Betriebsstellung, wie in Fig. 1 und 2 dargestellt, im Bereich der Spurreißerelementes 8 nach unten zu einem Mittelsteg 9 abgebogen. Das untere Ende 10 des Mittelsteges 9 ist wiederum abgebogen, so dass hier die Drehlagerung 7 bzw. das Halteelement 12 für die Drehlagerung 7 befestigt werden kann. Der Mittelsteg 9 des S-förmigen Bereiches 13 verläuft in Betriebsstellung der Spurreißers 1 aufrecht, wie die Fig. 1-3 zeigen. Das obere Ende 14 des Mittelsteges 9 schließt sich an dem im Betriebsstellung des Spurreißers 1 in liegender Weise in Richtung des Gelenkes 2 verlaufenden Teil 15 des Armes 4 an. Das untere Ende 10 des Mittelsteges 9 schließt sich an dem das Spurreißerelement 8 tragenden Teil 16 des Armes 4 an.

Der Arm 4 besteht aus einem Flachstahlstab mit federnden Eigenschaften. Der zwischen dem Gelenk 2 und dem S-förmigen Bereich 13 sich befindliche Teil 15 des Armes 4 ist als Torsionsfederelement ausgebildet. Diese Wirkung wird einerseits dadurch erzielt, dass der Arm 4 federnd ausgebildet ist, also aus Federstahl besteht. Weiterhin ist hierbei entscheidend, dass das dem Spurreißerelement 8 zugewandte Ende des Armes 4 zur Bildung des Mittelsteges 9 des S -förmigen Bereiches 13 nach unten abgebogen ist und somit einen Hebelarm 9 bildet. Wenn größere Kräfte auf das Spurreißerelement 8 einwirken, wird durch den als Hebelarm wirkenden Mittelsteg 9 der liegende Teil 15 des Armes 4 wie eine Torsionsfeder verdreht. Hierdurch ist also in integrierter Weise das federnde Sicherheitselement 13, welches von dem Bereich 13 mit dem Teil 15 des Armes 4 gebildet wird, in den Arm 4 des Spurreißers 1 angeordnet.

## Patentansprüche

1. Spurreißer für landwirtschaftliche Maschinen, wie Sämaschinen, Bodenbearbeitungsgeräte, wobei der Spurreißer einen mittels eines Gelenkes an dem Rahmen der Maschine angeordneten Arm, der an seinem dem Gelenk abgewandten Ende ein Spurreißerelement trägt, aufweist, wobei zwischen dem Gelenk des Armes und dem Spurreißerelement ein elastisches Sicherheitselement vorgesehen ist, wobei der Arm (4) in der Nähe des Spurreißerelementes (1) S-förmig ausgestaltet ist, wobei der Mittelsteg (9) des S-förmigen Bereiches (13) in Betriebsstellung des Spurreißers (1) aufrecht verlaufend angeordnet ist,
wobei der zwischen dem Gelenk (2) und dem S-förmigen Bereich (13) sich befindliche Teil (15) des Armes (4) als Torsionsfederelement ausgebildet und **dadurch gekennzeichnet, dass** der Arm (4) aus einem Flachstahlstab aus Federstahl besteht, und dass, der aufrechte Mittelsteg (9) durch Abbiegen des Armes (4) nach unten gebildet ist.

2. Spurreißer nach Anspruch 1, **dadurch gekennzeichnet, dass** das obere Ende (14) des Mittelsteges (9) an dem in Betriebsstellung des Spurreißers (1) in liegender Weise in Richtung des Gelenkes (2) verlaufenden Teil (15) des Armes (4) anschließt, dass das untere Ende (10) des Mittelsteges (9) an dem das Spurreißerelement (1) tragenden Teil (16) des Armes (4) anschließt.

3. Spurreißer nach Anspruch 2, **dadurch gekennzeichnet, dass** das das Spurreißerelement (1) tragende Teil (16) des Armes (4) zumindest ein Lagerelement (7) aufweist, dass an dem Lagerelement (7) das als drehbar angeordnete Spurreißerscheibe (8) ausgebildete Spurreißerelement angeordnet ist.

## Claims

1. Ridge-marking device for agricultural machines, such as seeders and soil cultivation implements, wherein the ridge-marking device has an arm which is arranged on the frame of the machine by means of a joint and bears a ridge-marking element at its end facing away from the joint, wherein an elastic safety element is provided between the joint of the arm and the ridge-marking element, wherein the arm (4) is of S-shaped configuration in the vicinity of the ridge-marking element (1), wherein the central web (9) of the S-shaped region (13) is arranged running upright in the operating position of the ridge-marking device (1), wherein that part (15) of the arm (4) which is located between the joint (2) and the S-shaped region (13) is designed as a torsion spring element, and **characterized in that** the arm (4) is composed of a flat steel rod consisting of spring steel, and **in that** the upright central web (9) is formed by bending the arm (4) downwards.

2. Ridge-marking device according to Claim 1, **characterized in that** the upper end (14) of the central web (9) is connected to that part (15) of the arm (4) which runs horizontally in the direction of the joint (2) in the operating position of the ridge-marking device (1), and **in that** the lower end (10) of the central web (9) is connected to that part (16) of the arm (4) which bears the ridge-marking element (1).

3. Ridge-marking device according to Claim 2, **characterized in that** that part (16) of the arm (4) which bears the ridge-marking element (1) has at least one bearing element (7), and **in that** the ridge-marking element which is designed as a rotatably arranged ridge-marking disc (8) is arranged on the bearing element (7).

## Revendications

1. Traceur pour machines agricoles, comme des semoirs, des appareils pour travailler le sol, dans lequel le traceur présente un bras disposé sur le châssis de la machine au moyen d'une articulation, qui porte un élément de traçage à son extrémité opposée à l'articulation, dans lequel il est prévu un élément de sécurité élastique entre l'articulation du bras et l'élément de traçage, dans lequel le bras (4) est réalisé en forme de S à proximité de l'élément de traçage (1), dans lequel la branche médiane (9) de la zone en forme de S (13) est disposée en position verticale dans la position de fonctionnement du traceur (1), dans lequel la partie (15) du bras (4) se trouvant entre l'articulation (2) et la zone en forme de S (13) est réalisée sous la forme d'un élément de ressort de torsion, **caractérisé en ce que** le bras (4) est constitué par une barre d'acier plat en acier à ressort et **en ce que** la branche médiane verticale (9) est formée par pliage du bras (4) vers le bas.

2. Traceur selon la revendication 1, **caractérisé en ce que** l'extrémité supérieure (14) de la branche médiane (9) se raccorde à la partie (15) du bras (4) s'étendant en position horizontale en direction de l'articulation (2) dans la position de fonctionnement du traceur (1), et **en ce que** l'extrémité inférieure (10) de la branche médiane (9) se raccorde à la partie (16) du bras (4) qui porte l'élément de traçage (1).

3. Traceur selon la revendication 2, **caractérisé en ce que** la partie (16) du bras (4) qui porte l'élément de traçage (1) présente au moins un élément de palier (7), et **en ce que** l'élément de traçage formé par un disque de traçage (8) agencé de façon tournante est disposé sur l'élément de palier (7).
